# EUROPEAN PATENT SPECIFICATION

(11) **EP 2 357 775 B1**
(45) Date of publication and mention of the grant of the patent: **10.08.2016**
(21) Application number: 10153024.4
(22) Date of filing: 09.02.2010
(51) Int. Cl.: H04M 1/2745

(54) **Electronic device and method of providing an update to contact information**
Elektronische Vorrichtung und Verfahren zur Bereitstellung einer Aktualisierung zur Kontaktierung von Informationen
Dispositif électronique et procédé de fourniture de mise à jour à des informations de contact

(43) Date of publication of application: 17.08.2011
(73) Proprietor: BlackBerry Limited, Waterloo, ON N2K 0A7 (CA)
(72) Inventor: Gandhi, Shivangi Anantrupa, Waterloo Ontario N2L 5Z5 (CA); Singh, Ravi, Waterloo Ontario N2L 5Z5 (CA)
(74) Representative: Gill Jennings & Every LLP

(56) References cited:
- EP-A1- 2 096 842
- US-A1- 2004 054 746
- US-A1- 2004 235 467
- US-A1- 2007 021 111
- US-A1- 2009 092 233

## Description

### TECHNICAL FIELD

The present application relates to electronic devices that have personal information manager functionality and a method of providing updated contact information to electronic devices.

### BACKGROUND DISCUSSION

Electronic devices, including portable electronic devices, have gained widespread use and can perform a variety of functions including, for example, telephonic, electronic messaging and other personal information manager (PIM) application functions. Portable electronic devices can include several types of devices including mobile stations such as simple cellular telephones, smart telephones, wireless PDAs, and laptop computers with wireless 802.11 or Bluetooth capabilities. These devices run on a wide variety of networks from data-only networks such as Mobitex and DataTAC to complex voice and data networks such as GSM/GPRS, CDMA, EDGE, UMTS and CDMA2000 networks.

PIM applications permit storage and rendering of PIM records including, for example, contact data records. Such records may be rendered for viewing or may be used for contacting a contact using the portable electronic device. Maintaining current contact information at portable electronic devices is important for communication.

US 2009/092233 discloses a method of updating mobile telephone contact list entries in which the mobile telephone automatically sends a new contact information notification text message to selected contact mobile phone numbers. The mobile telephone automatically updates an entry in its contact list in response to receiving a new contact information text notification message from another mobile telephone.

EP 2,096,842 discloses a method for selecting a communication lines from two or more lines on a communication device.

US 2007/021111 discloses an information management system for operation over a network that includes a first mobile device first mobile device having a first application module, the first mobile device operating over the network and in communication with a second mobile device having a second application module, a first operating system residing on the first mobile device configured to detect a communication event between the first mobile device and the second mobile device, and an address book module residing on the second mobile device. The first application module is configured to send information associated with the first mobile device to the second mobile device in association with a detection of the communication event.

US 2004/054746 discloses telephone directory information sharing system used among a plurality of mobile phones. When a sending end newly registers or changes telephone directory information in his/her mobile phone, an e-mail program in the sender's mobile phone automatically transmits the telephone directory information as sharing information by e-mail to plural receivers. When receiving the e-mail message, a sharing control section in the receiver's mobile phone analyzes the e-mail message defined as the telephone directory information to be shared. Subsequently, a telephone directory information registering section in the receiver's mobile phone automatically registers the telephone directory information and updates the telephone directory.

US 2004/235467 discloses a method for updating in at least a first mobile communication apparatus of a network a personal data file concerning at lease a correspondent of the user of the firs communication apparatus. The correspondent is equipped with a second mobile communication apparatus in which personal information concerning the correspondent has been modified. The second mobile communication apparatus detects the call number of the first mobile communication apparatus and transmits to the first mobile communication apparatus the modified personal information.

### SUMMARY

According to one aspect, there is provided a method of providing an update to contact information of a user of a portable electronic device. The method includes the steps defined in claim 1.

According to another aspect, an electronic device is provided. The electronic device includes the features defined in claim 10.

According to another aspect, a computer program product is provided. The computer program product includes computer-readable medium having computer-readable code embodied therein. The computer-readable code is executable by a processor of an electronic device to cause the electronic device to perform the steps defined in claim 11.

When contact information such as a phone number, PIN, email address, or other suitable contact information for a user of a portable electronic device, changes, the change is automatically detected and update messages may be sent to contacts in a contacts database. The update may be in the form of a message that is received at another device for updating by the user at the other device or may be sent for automatically updating a contact data record at the other device. This reduces the chance of misdirected or lost communication resulting from a change to contact information that is not relayed to contacts. The update may be sent based on an order of priority. The method may be carried out any time a change is detected and reduces the user-interaction and time of use compared to manual preparation and sending of messages. With less user-interaction and device use time, there is a corresponding savings in power consumption and increased battery life between charging of the battery at the portable electronic device.

### BRIEF DESCRIPTION OF THE DRAWINGS

Embodiments of the present application will now be described, by way of example only, with reference to the attached Figures, wherein
Figure 1 is a block diagram of an example of an embodiment of a portable electronic device;
Figure 2 is an example of a block diagram of a communication subsystem component of Figure 1;
Figure 3 is a block diagram of an example of an implementation of a node of a wireless network;
Figure 4 is a block diagram illustrating components of an example of a configuration of a host system that the portable electronic device can communicate with;
Figures 5 to 9 show examples of screen shots of a portable electronic device;
Figure 10 is a flowchart illustrating a method of providing an update to contact information according to an embodiment;
Figures 11 to 13 show examples of screen shots of the portable electronic device.

### DETAILED DESCRIPTION

The following describes a portable electronic device for and method of providing an update to contact information of a user of a portable electronic device. The method includes, when a change is made to the contact information, determining that the contact information has changed, retrieving contact data of contact data records stored at the portable electronic device, and generating and sending updates from the portable electronic device based on the contact data of the contact data records.

It will be appreciated that for simplicity and clarity of illustration, where considered appropriate, reference numerals may be repeated among the figures to indicate corresponding or analogous elements. In addition, numerous specific details are set forth in order to provide a thorough understanding of the embodiments described herein. However, it will be understood by those of ordinary skill in the art that the embodiments described herein may be practiced without these specific details. In other instances, well-known methods, procedures and components have not been described in detail so as not to obscure the embodiments described herein. Also, the description is not to be considered as limiting the scope of the embodiments described herein.

The embodiments described herein generally relate to portable electronic devices. Examples of portable electronic devices include mobile or handheld wireless communication devices such as pagers, cellular phones, cellular smart-phones, wireless organizers, personal digital assistants, computers, laptops, handheld wireless communication devices, wirelessly enabled notebook computers and the like.

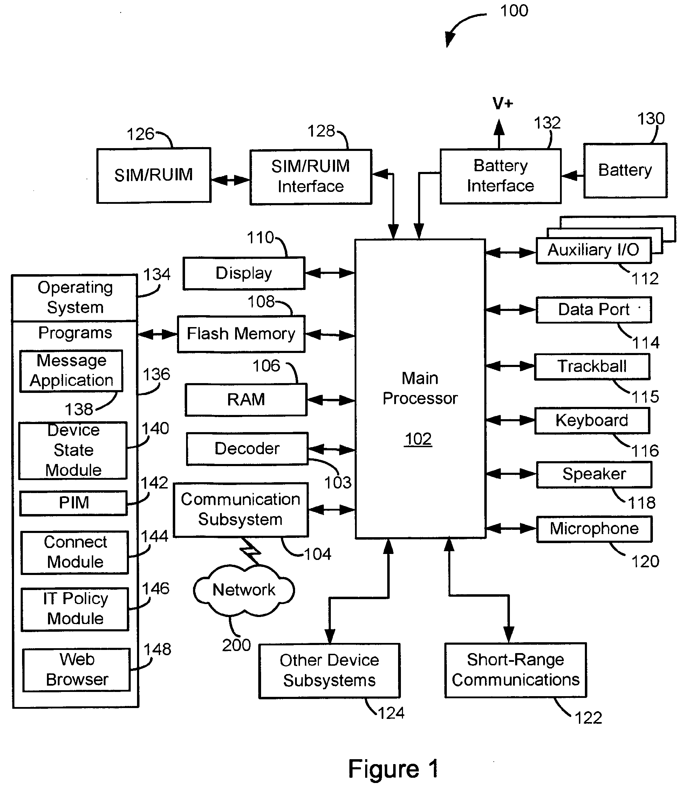

The portable electronic device may be a two-way communication device with advanced data communication capabilities including the capability to communicate with other portable electronic devices or computer systems through a network of transceiver stations. The portable electronic device may also have the capability to allow voice communication. Depending on the functionality provided by the portable electronic device, it may be referred to as a data messaging device, a two-way pager, a cellular telephone with data messaging capabilities, a wireless Internet appliance, or a data communication device (with or without telephony capabilities). To aid the reader in understanding the structure of the portable electronic device and how it communicates with other devices and host systems, reference will now be made to Figures 1 through 4.

Referring first to Figure 1, shown therein is a block diagram of an example of an embodiment of a portable electronic device 100. The portable electronic device 100 includes a number of components such as a main processor 102 that controls the overall operation of the portable electronic device 100. Communication functions, including data and voice communications, are performed through a communication subsystem 104. Data received by the portable electronic device 100 can be decompressed and decrypted by a decoder 103, operating according to any suitable decompression techniques (e.g. YK decompression, and other known techniques) and encryption techniques (e.g. using an encryption technique such as Data Encryption Standard (DES), Triple DES, or Advanced Encryption Standard (AES)). The communication subsystem 104 receives messages from and sends messages to a wireless network 200. In this example of an embodiment of the portable electronic device 100, the communication subsystem 104 is configured in accordance with the Global System for Mobile Communication (GSM) and General Packet Radio Services (GPRS) standards. The GSM/GPRS wireless network is used worldwide and it is expected that these standards will be superseded eventually by Enhanced Data GSM Environment (EDGE) and Universal Mobile Telecommunications Service (UMTS). New standards are still being defined, but it is believed that they will have similarities to the network behavior described herein, and it will also be understood by persons skilled in the art that the embodiments described herein are intended to use any other suitable standards that are developed in the future. The wireless link connecting the communication subsystem 104 with the wireless network 200 represents one or more different Radio Frequency (RF) channels, operating according to defined protocols specified for GSM/GPRS communications. With newer network protocols, these channels are capable of supporting both circuit switched voice communications and packet switched data communications.

Although the wireless network 200 associated with portable electronic device 100 is a GSM/GPRS wireless network in one example of an implementation, other wireless networks may also be associated with the portable electronic device 100 in variant implementations. The different types of wireless networks that may be employed include, for example, data-centric wireless networks, voice-centric wireless networks, and dual-mode networks that can support both voice and data communications over the same physical base stations. Combined dual-mode networks include, but are not limited to, Code Division Multiple Access (CDMA) or CDMA2000 networks, GSM/GPRS networks (as mentioned above), and third-generation (3G) networks such as EDGE and UMTS. Some other examples of data-centric networks include WiFi 802.11, Mobitex™ and DataTAC™ network communication systems. Examples of other voice-centric data networks include Personal Communication Systems (PCS) networks like GSM and Time Division Multiple Access (TDMA) systems. The main processor 102 also interacts with additional subsystems such as a Random Access Memory (RAM) 106, a flash memory 108, a display 110, an auxiliary input/output (I/O) subsystem 112, a data port 114, a trackball 115, a keyboard 116, a speaker 118, a microphone 120, short-range communications 122 and other device subsystems 124.

Some of the subsystems of the portable electronic device 100 perform communication-related functions, whereas other subsystems may provide "resident" or on-device functions. By way of example, the display 110, the trackball 115 and the keyboard 116 may be used for both communication-related functions, such as entering a text message for transmission over the network 200, and device-resident functions such as a calculator or task list.

The portable electronic device 100 can send and receive communication signals over the wireless network 200 after network registration or activation procedures have been completed. Network access is associated with a subscriber or user of the portable electronic device 100. To identify a subscriber, a SIM/RUIM card 126 (i.e. Subscriber Identity Module or a Removable User Identity Module) is inserted into a SIM/RUIM interface 128 in order to communicate with a network. The SIM/RUIM card 126 is a type of a conventional "smart card" that can be used to identify a subscriber of the portable electronic device 100 and to personalize the portable electronic device 100, among other things. In the present embodiment, the portable electronic device 100 is not fully operational for communication with the wireless network 200 without the SIM/RUIM card 126. By inserting the SIM/RUIM card 126 into the SIM/RUIM interface 128, a subscriber can access all subscribed services. Services may include: web browsing and messaging such as email, voice mail, Short Message Service (SMS), and Multimedia Messaging Services (MMS). More advanced services may include: point of sale, field service and sales force automation. The SIM/RUIM card 126 includes a processor and memory for storing information. Once the SIM/RUIM card 126 is inserted into the SIM/RUIM interface 128, it is coupled to the main processor 102. In order to identify the subscriber, the SIM/RUIM card 126 can include some user parameters such as an International Mobile Subscriber Identity (IMSI). An advantage of using the SIM/RUIM card 126 is that a subscriber is not necessarily bound by any single physical portable electronic device. The SIM/RUIM card 126 may store additional subscriber information for a portable electronic device as well, including datebook (or calendar) information and recent call information. Alternatively, user identification information can also be programmed into the flash memory 108.

The portable electronic device 100 is a battery-powered device and includes a battery interface 132 for receiving one or more rechargeable batteries 130. In at least some embodiments, the battery 130 can be a smart battery with an embedded microprocessor. The battery interface 132 is coupled to a regulator (not shown), which assists the battery 130 in providing power V+ to the portable electronic device 100. Although current technology makes use of a battery, future technologies such as micro fuel cells may provide the power to the portable electronic device 100.

The portable electronic device 100 also includes an operating system 134 and software components 136 to 148 which are described in more detail below. The operating system 134 and the software components 136 to 146 that are executed by the main processor 102 are typically stored in a persistent store such as the flash memory 108, which may alternatively be a read-only memory (ROM) or similar storage element (not shown). Those skilled in the art will appreciate that portions of the operating system 134 and the software components 136 to 146, such as specific device applications, or parts thereof, may be temporarily loaded into a volatile store such as the RAM 106. Other software components can also be included, as is well known to those skilled in the art.

The subset of software applications 136 that control basic device operations, including data and voice communication applications are installed on the portable electronic device 100 during its manufacture. Other software applications include a message application 138 that can be any suitable software program that allows a user of the portable electronic device 100 to send and receive electronic messages. Various alternatives exist for the message application 138 as is well known to those skilled in the art. Messages that have been sent or received by the user are typically stored in the flash memory 108 of the portable electronic device 100 or some other suitable storage element in the portable electronic device 100. In at least some embodiments, some of the sent and received messages may be stored remotely from the device 100 such as in a data store of an associated host system that the portable electronic device 100 communicates with.

The software applications can further include a device state module 140, a Personal Information Manager (PIM) 142, and other suitable modules (not shown). The device state module 140 provides persistence, i.e. the device state module 140 ensures that important device data is stored in persistent memory, such as the flash memory 108, so that the data is not lost when the portable electronic device 100 is turned off or loses power.

The PIM 142 includes functionality for organizing and managing data items of interest to the user, such as, but not limited to, email, contact data records, calendar events, voice mails, appointments, and task items. PIM applications include, for example, calendar, address book, tasks and memo applications. The PIM applications have the ability to send and receive data items via the wireless network 200. PIM data items may be seamlessly integrated, synchronized, and updated via the wireless network 200 with the portable electronic device subscriber's corresponding data items stored and/or associated with a host computer system. This functionality creates a mirrored host computer on the portable electronic device 100 with respect to such items. This can be particularly advantageous when the host computer system is the portable electronic device subscriber's office computer system.

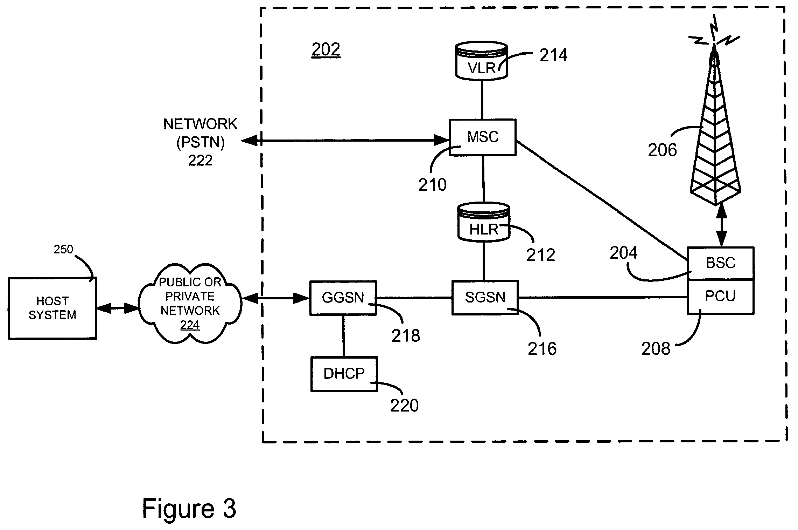

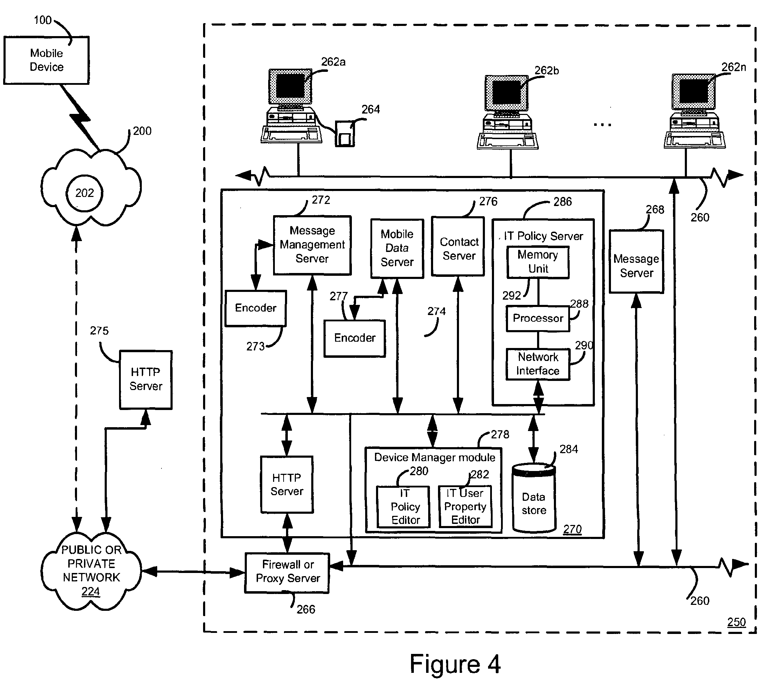

The portable electronic device 100 also includes a connect module 144, and an information technology (IT) policy module 146. The connect module 144 implements the communication protocols that are required for the portable electronic device 100 to communicate with the wireless infrastructure and any host system, such as an enterprise system, that the portable electronic device 100 is authorized to interface with. Examples of a wireless infrastructure and an enterprise system are given in Figures 3 and 4, which are described in more detail below.

The connect module 144 includes a set of APIs that can be integrated with the portable electronic device 100 to allow the portable electronic device 100 to use any number of services associated with the enterprise system. The connect module 144 allows the portable electronic device 100 to establish an end-to-end secure, authenticated communication pipe with the host system. A subset of applications for which access is provided by the connect module 144 can be used to pass IT policy commands from the host system to the portable electronic device 100. This can be done in a wireless or wired manner. These instructions can then be passed to the IT policy module 146 to modify the configuration of the device 100. Alternatively, in some cases, the IT policy update can also be done over a wired connection.

Other types of software applications can also be provided on the portable electronic device 100, including the Web browser 148 for enabling a user to display and interact with text, images, videos, music and other information from a webpage at a website on the world wide web or on a local network.

Still other types of software applications can be installed on the portable electronic device 100. Such software applications can be third party applications, which are added after the manufacture of the portable electronic device 100. Examples of third party applications include games, calculators, utilities, etc.

The additional applications can be loaded onto the portable electronic device 100 through at least one of the wireless network 200, the auxiliary I/O subsystem 112, the data port 114, the short-range communications subsystem 122, or any other suitable device subsystem 124. This flexibility in application installation increases the functionality of the portable electronic device 100 and may provide enhanced on-device functions, communication-related functions, or both. For example, secure communication applications may enable electronic commerce functions and other such financial transactions to be performed using the portable electronic device 100.

The data port 114 enables a subscriber to set preferences through an external device or software application and extends the capabilities of the portable electronic device 100 by providing for information or software downloads to the portable electronic device 100 other than through a wireless communication network. The alternate download path may, for example, be used to load an encryption key onto the portable electronic device 100 through a direct and thus reliable and trusted connection to provide secure device communication.

The data port 114 can be any suitable port that enables data communication between the portable electronic device 100 and another computing device. The data port 114 can be a serial or a parallel port. In some instances, the data port 114 can be a USB port that includes data lines for data transfer and a supply line that can provide a charging current to charge the battery 130 of the portable electronic device 100.

The short-range communications subsystem 122 provides for communication between the portable electronic device 100 and different systems or devices, without the use of the wireless network 200. For example, the subsystem 122 may include an infrared device and associated circuits and components for short-range communication. Examples of short-range communication standards include standards developed by the Infrared Data Association (IrDA), Bluetooth, and the 802.11 family of standards developed by IEEE.

In use, a received signal such as a text message, an email message, webpage download, or any other information is processed by the communication subsystem 104 and input to the main processor 102 where the received signal is processed for output to the display 110 or alternatively to the auxiliary I/O subsystem 112. A subscriber may also compose data items, such as email messages, for example, using the keyboard 116 in conjunction with the display 110 and possibly the auxiliary I/O subsystem 112. The auxiliary subsystem 112 may include devices such as: a touch screen, mouse, track ball, infrared fingerprint detector, or a roller wheel with dynamic button pressing capability. The keyboard 116 is preferably an alphanumeric keyboard and/or telephone-type keypad. However, other types of keyboards may also be used. A composed item may be transmitted over the wireless network 200 through the communication subsystem 104.

For voice communications, the overall operation of the portable electronic device 100 is substantially similar, except that the received signals are output to the speaker 118, and signals for transmission are generated by the microphone 120. Alternative voice or audio I/O subsystems, such as a voice message recording subsystem, can also be implemented on the portable electronic device 100. Although voice or audio signal output is accomplished primarily through the speaker 118, the display 110 can also be used to provide additional information such as the identity of a calling party, duration of a voice call, or other voice call related information.

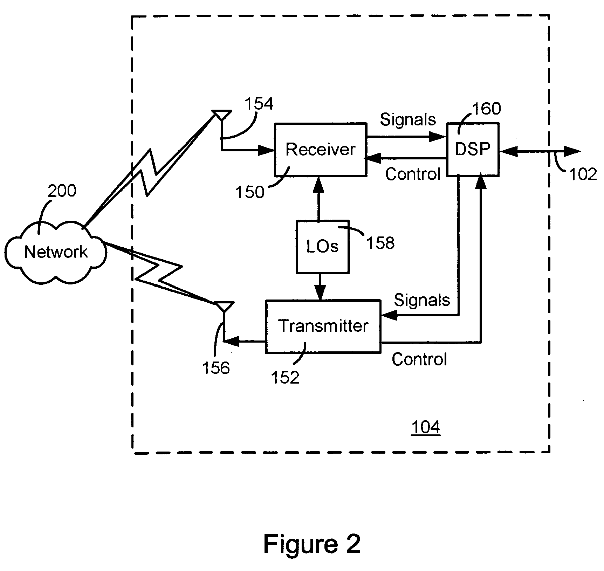

Referring now to Figure 2, an example of a block diagram of the communication subsystem component 104 is shown. The communication subsystem 104 includes a receiver 150, a transmitter 152, as well as associated components such as one or more embedded or internal antenna elements 154 and 156, Local Oscillators (LOs) 158, and a processing module such as a Digital Signal Processor (DSP) 160. The particular design of the communication subsystem 104 is dependent upon the communication network 200 with which the portable electronic device 100 is intended to operate. Thus, it should be understood that the design illustrated in Figure 2 serves only as one example.

Signals received by the antenna 154 through the wireless network 200 are input to the receiver 150, which may perform such common receiver functions as signal amplification, frequency down conversion, filtering, channel selection, and analog-to-digital (A/D) conversion. A/D conversion of a received signal allows more complex communication functions such as demodulation and decoding to be performed in the DSP 160. In a similar manner, signals to be transmitted are processed, including modulation and encoding, by the DSP 160. These DSP-processed signals are input to the transmitter 152 for digital-to-analog (D/A) conversion, frequency up conversion, filtering, amplification and transmission over the wireless network 200 via the antenna 156. The DSP 160 not only processes communication signals, but also provides for receiver and transmitter control. For example, the gains applied to communication signals in the receiver 150 and the transmitter 152 may be adaptively controlled through automatic gain control algorithms implemented in the DSP 160.

The wireless link between the portable electronic device 100 and the wireless network 200 can contain one or more different channels, typically different RF channels, and associated protocols used between the portable electronic device 100 and the wireless network 200. An RF channel is a limited resource that should be conserved, typically due to limits in overall bandwidth and limited battery power of the portable electronic device 100.

When the portable electronic device 100 is fully operational, the transmitter 152 is typically keyed or turned on only when it is transmitting to the wireless network 200 and is otherwise turned off to conserve resources. Similarly, the receiver 150 is periodically turned off to conserve power until it is needed to receive signals or information (if at all) during designated time periods.

Referring now to Figure 3, a block diagram of an example of an implementation of a node 202 of the wireless network 200 is shown. In practice, the wireless network 200 comprises one or more nodes 202. In conjunction with the connect module 144, the portable electronic device 100 can communicate with the node 202 within the wireless network 200. In the example of an implementation of Figure 3, the node 202 is configured in accordance with General Packet Radio Service (GPRS) and Global Systems for Mobile (GSM) technologies. The node 202 includes a base station controller (BSC) 204 with an associated tower station 206, a Packet Control Unit (PCU) 208 added for GPRS support in GSM, a Mobile Switching Center (MSC) 210, a Home Location Register (HLR) 212, a Visitor Location Registry (VLR) 214, a Serving GPRS Support Node (SGSN) 216, a Gateway GPRS Support Node (GGSN) 218, and a Dynamic Host Configuration Protocol (DHCP) 220. This list of components is not meant to be an exhaustive list of the components of every node 202 within a GSM/GPRS network, but rather a list of components that are commonly used in communications through the network 200.

In a GSM network, the MSC 210 is coupled to the BSC 204 and to a landline network, such as a Public Switched Telephone Network (PSTN) 222 to satisfy circuit switched requirements. The connection through the PCU 208, the SGSN 216 and the GGSN 218 to a public or private network (Internet) 224 (also referred to herein generally as a shared network infrastructure) represents the data path for GPRS capable portable electronic devices. In a GSM network extended with GPRS capabilities, the BSC 204 also contains the Packet Control Unit (PCU) 208 that connects to the SGSN 216 to control segmentation, radio channel allocation and to satisfy packet switched requirements. To track the location of the portable electronic device 100 and availability for both circuit switched and packet switched management, the HLR 212 is shared between the MSC 210 and the SGSN 216. Access to the VLR 214 is controlled by the MSC 210.

The station 206 is a fixed transceiver station and together with the BSC 204 form fixed transceiver equipment. The fixed transceiver equipment provides wireless network coverage for a particular coverage area commonly referred to as a "cell". The fixed transceiver equipment transmits communication signals to and receives communication signals from portable electronic devices within its cell via the station 206. The fixed transceiver equipment normally performs such functions as modulation and possibly encoding and/or encryption of signals to be transmitted to the portable electronic device 100 in accordance with particular, usually predetermined, communication protocols and parameters, under control of its controller. The fixed transceiver equipment similarly demodulates and possibly decodes and decrypts, if necessary, any communication signals received from the portable electronic device 100 within its cell. Communication protocols and parameters may vary between different nodes. For example, one node may employ a different modulation scheme and operate at different frequencies than other nodes.

For all portable electronic devices 100 registered with a specific network, permanent configuration data such as a user profile is stored in the HLR 212. The HLR 212 also contains location information for each registered portable electronic device and can be queried to determine the current location of a portable electronic device. The MSC 210 is responsible for a group of location areas and stores the data of the portable electronic devices currently in its area of responsibility in the VLR 214. Further, the VLR 214 also contains information on portable electronic devices that are visiting other networks. The information in the VLR 214 includes part of the permanent portable electronic device data transmitted from the HLR 212 to the VLR 214 for faster access. By moving additional information from a remote HLR 212 node to the VLR 214, the amount of traffic between these nodes can be reduced so that voice and data services can be provided with faster response times and at the same time requiring less use of computing resources.

The SGSN 216 and the GGSN 218 are elements added for GPRS support; namely packet switched data support, within GSM. The SGSN 216 and the MSC 210 have similar responsibilities within the wireless network 200 by keeping track of the location of each portable electronic device 100. The SGSN 216 also performs security functions and access control for data traffic on the wireless network 200. The GGSN 218 provides internetworking connections with external packet switched networks and connects to one or more SGSN's 216 via an Internet Protocol (IP) backbone network operated within the network 200. During normal operations, a given portable electronic device 100 must perform a "GPRS Attach" to acquire an IP address and to access data services. This requirement is not present in circuit switched voice channels as Integrated Services Digital Network (ISDN) addresses are used for routing incoming and outgoing calls. Currently, all GPRS capable networks use private, dynamically assigned IP addresses, thus requiring the DHCP server 220 connected to the GGSN 218. There are many mechanisms for dynamic IP assignment, including using a combination of a Remote Authentication Dial-In User Service (RADIUS) server and a DHCP server. Once the GPRS Attach is complete, a logical connection is established from a portable electronic device 100, through the PCU 208, and the SGSN 216 to an Access Point Node (APN) within the GGSN 218. The APN represents a logical end of an IP tunnel that can either access direct Internet compatible services or private network connections. The APN also represents a security mechanism for the network 200, insofar as each portable electronic device 100 must be assigned to one or more APNs and portable electronic devices 100 cannot exchange data without first performing a GPRS Attach to an APN that it has been authorized to use. The APN may be considered to be similar to an Internet domain name such as "myconnection.wireless.com".

Once the GPRS Attach operation is complete, a tunnel is created and all traffic is exchanged within standard IP packets using any protocol that can be supported in IP packets. This includes tunneling methods such as IP over IP as in the case with some IPSecurity (IPsec) connections used with Virtual Private Networks (VPN). These tunnels are also referred to as Packet Data Protocol (PDP) Contexts and there are a limited number of these available in the network 200. To maximize use of the PDP Contexts, the network 200 will run an idle timer for each PDP Context to determine if there is a lack of activity. When a portable electronic device 100 is not using its PDP Context, the PDP Context can be deallocated and the IP address returned to the IP address pool managed by the DHCP server 220.

Referring now to Figure 4, shown therein is a block diagram illustrating components of an example of a configuration of a host system 250 that the portable electronic device 100 can communicate with in conjunction with the connect module 144. The host system 250 will typically be a corporate enterprise or other local area network (LAN), but may also be a home office computer or some other private system, for example, in variant implementations. In this example shown in Figure 4, the host system 250 is depicted as a LAN of an organization to which a user of the portable electronic device 100 belongs. Typically, a plurality of portable electronic devices can communicate wirelessly with the host system 250 through one or more nodes 202 of the wireless network 200.

The host system 250 comprises a number of network components connected to each other by a network 260. For instance, a user's desktop computer 262a with an accompanying cradle 264 for the user's portable electronic device 100 is situated on a LAN connection. The cradle 264 for the portable electronic device 100 can be coupled to the computer 262a by a serial or a Universal Serial Bus (USB) connection, for example. Other user computers 262b-262n are also situated on the network 260, and each may or may not be equipped with an accompanying cradle 264. The cradle 264 facilitates the loading of information (e.g. PIM data, private symmetric encryption keys to facilitate secure communications) from the user computer 262a to the portable electronic device 100, and may be particularly useful for bulk information updates often performed in initializing the portable electronic device 100 for use. The information downloaded to the portable electronic device 100 may include certificates used in the exchange of messages.

It will be understood by persons skilled in the art that the user computers 262a-262n will typically also be connected to other peripheral devices, such as printers, etc. which are not explicitly shown in Figure 4. Furthermore, only a subset of network components of the host system 250 are shown in Figure 4 for ease of exposition, and it will be understood by persons skilled in the art that the host system 250 will comprise additional components that are not explicitly shown in Figure 4 for this example of a configuration. More generally, the host system 250 may represent a smaller part of a larger network (not shown) of the organization, and may comprise different components and/or be arranged in different topologies than that shown in the example of an embodiment of Figure 4.

To facilitate the operation of the portable electronic device 100 and the wireless communication of messages and message-related data between the portable electronic device 100 and components of the host system 250, a number of wireless communication support components 270 can be provided. In some implementations, the wireless communication support components 270 can include a management server 272, a mobile data server (MDS) 274, a web server, such as Hypertext Transfer Protocol (HTTP) server 275, a contact server 276, and a device manager module 278. HTTP servers can also be located outside the enterprise system, as indicated by the HTTP server 275 attached to the network 224. The device manager module 278 includes an IT Policy editor 280 and an IT user property editor 282, as well as other software components for allowing an IT administrator to configure the portable electronic devices 100. In an alternative embodiment, there may be one editor that provides the functionality of both the IT policy editor 280 and the IT user property editor 282. The support components 270 also include a data store 284, and an IT policy server 286. The IT policy server 286 includes a processor 288, a network interface 290 and a memory unit 292. The processor 288 controls the operation of the IT policy server 286 and executes functions related to the standardized IT policy as described below. The network interface 290 allows the IT policy server 286 to communicate with the various components of the host system 250 and the portable electronic devices 100. The memory unit 292 can store functions used in implementing the IT policy as well as related data. Those skilled in the art know how to implement these various components. Other components may also be included as is well known to those skilled in the art. Further, in some implementations, the data store 284 can be part of any one of the servers.

In this example of an embodiment, the portable electronic device 100 communicates with the host system 250 through node 202 of the wireless network 200 and a shared network infrastructure 224 such as a service provider network or the public Internet. Access to the host system 250 may be provided through one or more routers (not shown), and computing devices of the host system 250 may operate from behind a firewall or proxy server 266. The proxy server 266 provides a secure node and a wireless internet gateway for the host system 250. The proxy server 266 intelligently routes data to the correct destination server within the host system 250.

In some implementations, the host system 250 can include a wireless VPN router (not shown) to facilitate data exchange between the host system 250 and the portable electronic device 100. The wireless VPN router allows a VPN connection to be established directly through a specific wireless network to the portable electronic device 100. The wireless VPN router can be used with the Internet Protocol (IP) Version 6 (IPV6) and IP-based wireless networks. This protocol can provide enough IP addresses so that each portable electronic device has a dedicated IP address, making it possible to push information to a portable electronic device at any time. An advantage of using a wireless VPN router is that it can be an off-the-shelf VPN component, and does not require a separate wireless gateway and separate wireless infrastructure. A VPN connection can preferably be a Transmission Control Protocol (TCP)/IP or User Datagram Protocol (UDP)/IP connection for delivering the messages directly to the portable electronic device 100 in this alternative implementation.

Messages intended for a user of the portable electronic device 100 are initially received by a message server 268 of the host system 250. Such messages may originate from any number of sources. For instance, a message may have been sent by a sender from the computer 262b within the host system 250, from a different portable electronic device (not shown) connected to the wireless network 200 or a different wireless network, or from a different computing device, or other device capable of sending messages, via the shared network infrastructure 224, possibly through an application service provider (ASP) or Internet service provider (ISP), for example.

The message server 268 typically acts as the primary interface for the exchange of messages, particularly email messages, within the organization and over the shared network infrastructure 224. Each user in the organization that has been set up to send and receive messages is typically associated with a user account managed by the message server 268. Some implementations of the message server 268 include a Microsoft Exchange™ server, a Lotus Domino™server, a Novell Groupwise™server, or another suitable mail server installed in a corporate environment. In some implementations, the host system 250 may comprise multiple message servers 268. The message server provides additional functions including PIM functions such as calendaring, contacts and tasks and supports data storage.

When messages are received by the message server 268, they are typically stored in a data store associated with the message server 268. In at least some embodiments, the data store may be a separate hardware unit, such as data store 284, that the message server 268 communicates with. Messages can be subsequently retrieved and delivered to users by accessing the message server 268. For instance, an email client application operating on a user's computer 262a may request the email messages associated with that user's account stored on the data store associated with the message server 268. These messages are then retrieved from the data store and stored locally on the computer 262a. The data store associated with the message server 268 can store copies of each message that is locally stored on the portable electronic device 100. Alternatively, the data store associated with the message server 268 can store all of the messages for the user of the portable electronic device 100 and only a smaller number of messages can be stored on the portable electronic device 100 to conserve memory. For instance, the most recent messages (i.e. those received in the past two to three months for example) can be stored on the portable electronic device 100.

When operating the portable electronic device 100, the user may wish to have email messages retrieved for delivery to the portable electronic device 100. The message application 138 operating on the portable electronic device 100 may also request messages associated with the user's account from the message server 268. The message application 138 may be configured (either by the user or by an administrator, possibly in accordance with an organization's IT policy) to make this request at the direction of the user, at some pre-defined time interval, or upon the occurrence of some pre-defined event. In some implementations, the portable electronic device 100 is assigned its own email address, and messages addressed specifically to the portable electronic device 100 are automatically redirected to the portable electronic device 100 as they are received by the message server 268.

The management server 272 can be used to specifically provide support for the management of, for example, messages, such as email messages, that are to be handled by portable electronic devices. Generally, while messages are still stored on the message server 268, the management server 272 can be used to control when, if, and how messages are sent to the portable electronic device 100. The management server 272 also facilitates the handling of messages composed on the portable electronic device 100, which are sent to the message server 268 for subsequent delivery.

For example, the management server 272 may monitor the user's "mailbox" (e.g. the message store associated with the user's account on the message server 268) for new email messages, and apply user-definable filters to new messages to determine if and how the messages are relayed to the user's portable electronic device 100. The management server 272 may also, through an encoder 273, compress messages, using any suitable compression technology (e.g. YK compression, and other known techniques) and encrypt messages (e.g. using an encryption technique such as Data Encryption Standard (DES), Triple DES, or Advanced Encryption Standard (AES)), and push them to the portable electronic device 100 via the shared network infrastructure 224 and the wireless network 200. The management server 272 may also receive messages composed on the portable electronic device 100 (e.g. encrypted using Triple DES), decrypt and decompress the composed messages, re-format the composed messages if desired so that they will appear to have originated from the user's computer 262a, and re-route the composed messages to the message server 268 for delivery.

Certain properties or restrictions associated with messages that are to be sent from and/or received by the portable electronic device 100 can be defined (e.g. by an administrator in accordance with IT policy) and enforced by the management server 272. These may include whether the portable electronic device 100 may receive encrypted and/or signed messages, minimum encryption key sizes, whether outgoing messages must be encrypted and/or signed, and whether copies of all secure messages sent from the portable electronic device 100 are to be sent to a pre-defined copy address, for example.

The management server 272 may also be adapted to provide other control functions, such as only pushing certain message information or pre-defined portions (e.g. "blocks") of a message stored on the message server 268 to the portable electronic device 100. For example, in some cases, when a message is initially retrieved by the portable electronic device 100 from the message server 268, the management server 272 may push only the first part of a message to the portable electronic device 100, with the part being of a pre-defined size (e.g. 2 KB). The user can then request that more of the message be delivered in similar-sized blocks by the management server 272 to the portable electronic device 100, possibly up to a maximum pre-defined message size. Accordingly, the management server 272 facilitates better control over the type of data and the amount of data that is communicated to the portable electronic device 100, and can help to minimize potential waste of bandwidth or other resources.

The MDS 274 encompasses any other server that stores information that is relevant to the corporation. The mobile data server 274 may include, but is not limited to, databases, online data document repositories, customer relationship management (CRM) systems, or enterprise resource planning (ERP) applications. The MDS 274 can also connect to the Internet or other public network, through HTTP server 275 or other suitable web server such as an File Transfer Protocol (FTP) server, to retrieve HTTP webpages and other data. Requests for webpages from the portable electronic device 100 are typically routed through MDS 274 and then to HTTP server 275, through suitable firewalls and other protective mechanisms. The web server then retrieves the webpage over the Internet, and returns it to MDS 274. As described above in relation to management server 272, MDS 274 is typically provided, or associated, with an encoder 277 that permits retrieved data, such as retrieved webpages, to be compressed, using any suitable compression technology (e.g. YK compression, and other known techniques), and encrypted (e.g. using an encryption technique such as DES, Triple DES, or AES), and then pushed to the portable electronic device 100 via the shared network infrastructure 224 and the wireless network 200.

The contact server 276 can provide information for a list of contact data records for the user in a similar fashion as the address book on the portable electronic device 100. Accordingly, for a given contact, the contact server 276 can include the name, phone number, work address and email address of the contact, among other information. The contact server 276 can also provide a global address list that contains the contact information for all of the contact data records associated with the host system 250.

It will be understood by persons skilled in the art that the management server 272, the MDS 274, the HTTP server 275, the contact server 276, the device manager module 278, the data store 284 and the IT policy server 286 do not need to be implemented on separate physical servers within the host system 250. For example, some or all of the functions associated with the management server 272 may be integrated with the message server 268, or some other server in the host system 250. Alternatively, the host system 250 may comprise multiple management servers 272, particularly in variant implementations where a large number of portable electronic devices need to be supported.

The device manager module 278 provides an IT administrator with a graphical user interface with which the IT administrator interacts to configure various settings for the portable electronic devices 100. As mentioned, the IT administrator can use IT policy rules to define behaviors of certain applications on the portable electronic device 100 that are permitted such as phone, web browser or Instant Messenger use. The IT policy rules can also be used to set specific values for configuration settings that an organization requires on the portable electronic devices 100 such as auto signature text, WLAN/VoIP/VPN configuration, security requirements (e.g. encryption algorithms, password rules, etc.), specifying themes or applications that are allowed to run on the portable electronic device 100, and the like.

As indicated above, the portable electronic device 100 includes the Personal Information Manager (PIM) 142 that includes functionality for organizing and managing data records of interest to the user, such as, but not limited to, email, contact data records, calendar events, voice mails, appointments, and task items. PIM applications include, for example, calendar, address book, tasks and memo applications. Additionally, the portable electronic device 100 includes functionality and is operable to send and receive PIN (Personal Identification Number) messages. PIN messages are messages that are relayed from the portable electronic device 100 for wireless delivery to a similarly enabled device identified by a unique number associated with the device. PIN messages may also be relayed from a similarly enabled device to the portable electronic device 100 identified by unique number. Thus, PIN messages are not transmitted to or through the host system 250.

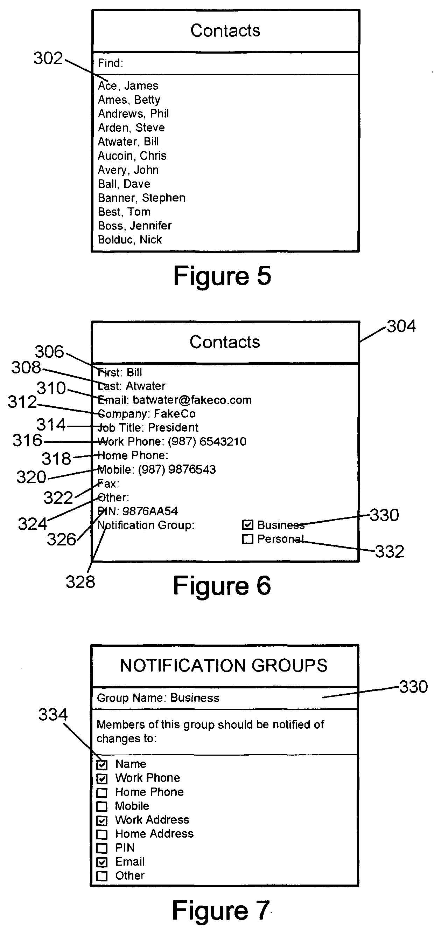

Figures 5 to 9 show examples of screen shots of the display 110 of the portable electronic device 100. As described above, the PIM 142 includes functionality for organizing and managing data items of interest to the user including contact data records. The contact data records may be stored locally in a contacts database on the SIM/RUIM card 126 at the portable electronic device 100 and may be retrieved for viewing and editing. Further, new contact data records may be composed and stored at the portable electronic device 100.

Selection of, for example, a contacts option or icon from a home screen on the portable electronic device 100, results in execution of a contacts application. Contact data records stored at the portable electronic device 100 are retrieved and rendered in a list on the display 110, such as the list 302 shown in Figure 5. In the present example, the contact data records are listed by last and first names only and are listed in alphabetical order. Optionally other or different information may be provided in the list 302. Further, the contact data records may be listed in any suitable order.

Each of the contact data records in the list 302 is selectable by, for example, user scrolling to highlight a desired one of the contact data records, followed by selection. In response to receiving the selection, further data from fields of the selected one of the contact data records is rendered. Figure 6 shows an example of data rendered from a contact data record 304 after selection from the list 302. In the present example, the data includes data from several fields of the contact data record. This includes data from fields such as a "First" field 306 for displaying a first name, a "Last" field 308 for displaying a last name, an "Email" field 310 for displaying an email address, a "Company" field 312 for displaying a company name, a "Job Title" field 314, a "Work Phone" field 316, a "Home Phone" field 318, a "Mobile" field 320 for displaying a mobile phone number, a "Fax" field 322, an "Other" field 324 for displaying any other phone or fax number, a "PIN" field 326, and a "Notification Group" field 328 for displaying the name of a group in which the contact data record is categorized. The data displayed in each of these fields is stored in the contact data record and may be edited or added in any suitable manner.

The "Notification Group" field 328 may include any number of notification groups and may be displayed in any suitable manner. In the present example, two notification groups are shown including a "Business" group 330 and a "Personal" group 332 and the contact data record 304 is categorized in the "Business" group 330. The group to which the contact data record belongs may be selected in any suitable manner when creating or editing a contact data record.

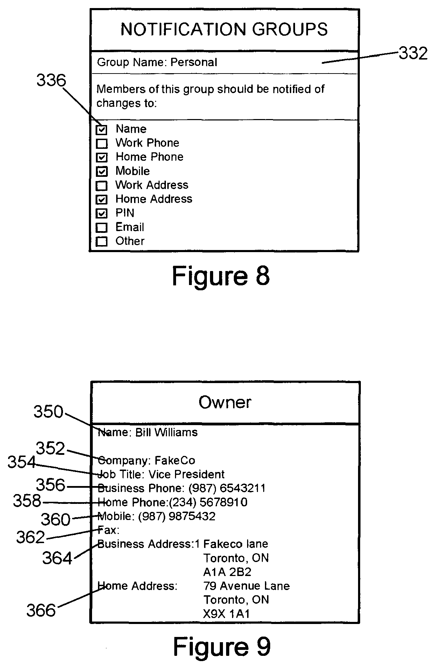

The "Notification Group" field 328 facilitates categorization of several contact data records stored in the contacts database into one of a small number of groups for user-defining the contact information of the user that is to be sent to each contact when a change to that contact information is determined. This categorization facilitates user-selection and control of information that is sent to the contacts so that not all user information is shared with each contact. Figures 7 and 8 show two screen shots illustrating selection lists 334, 336, respectively. The selection lists 334, 336 facilitate user-defining of the user's own contact information that is to be sent to the "Business" group 330 and the "Personal" group 332, respectively, when a change in the user's contact information is determined. In the example shown in the selection list 334 of Figure 7, an update notification is sent to the electronic device of each respective contact for the contact data records categorized in the "Business" group 330 when a change to any of the user's "Name", "Work Phone" number, "Work Address" and "Email" address is determined at the portable electronic device 100. The user may add further information by, for example, scrolling to and selecting the information or may remove information by scrolling to and deselecting the information. In the example shown in the selection list 336 of Figure 8, an update notification is sent to the electronic device of each respective contact for the contact data records categorized in the "Personal" group 332 when a change to any of the user's "Name", "Home Phone" number, "Mobile" phone number, "Home Address" and "PIN" is determined at the portable electronic device 100. Again, the user may add further information by, for example, scrolling to and selecting the information or may remove information by scrolling to and deselecting the information.

The user's contact information may be stored on the portable electronic device 100 in any suitable manner. For example, a PIN is associated with the hardware and therefore is pre-defined on the portable electronic device 100. The mobile phone number for the portable electronic device 100 may be associated with the SIM/RUIM card in the portable electronic device 100. The email address may be defined by the email address for which the portable electronic device 100 is enabled to send and receive email messages. Other information may be user-defined and stored on the SIM/RUIM card. Alternatively, the user-defined information may be stored in memory at the portable electronic device 100 and backed up at the host system. The information is added or edited by the user of the portable electronic device 100. Figure 9 shows one example of user-defined information stored on the portable electronic device 100 and includes information stored in fields including a "Name" field 350, a "Company" field 352, a "Job Title" field 354, a "Work Phone" field 356, a "Home Phone" field 358, a "Mobile" field 360, a "Fax" field 362, a "Work Address" field 364 and a "Home Address" field 366. The information may be displayed, for example, in response to receipt of selection of an option from a menu or submenu and may be added, deleted or otherwise edited. After adding, deleting or otherwise editing the user information, the user may save the changes, for example, by selection of an option to save from a menu.

When a selection of the save option is received at the portable electronic device 100, the "save" option provides an indication of an update, referred to herein as an update indicator. Similarly, when the portable electronic device 100 powers up (boots up) from an off-power state, an update indicator is provided as a change may be made to the mobile phone number associated with the SIM/RUIM card or the SIM/RUIM card may have changed. Further, an update indicator is provided when the portable electronic device is activated for communication with the host system 250 as a user may have changed to a new portable electronic device with a different PIN. Further, an update indicator may be provided when a new SIM/RUIM card is inserted, rather than on boot-up, in the event that SIM/RUIM card may be changed with the power on.

Optionally, each time a new contact data record is added to the address book, an update indicator may also be provided so that the user's information is sent to the electronic device for the new contact.

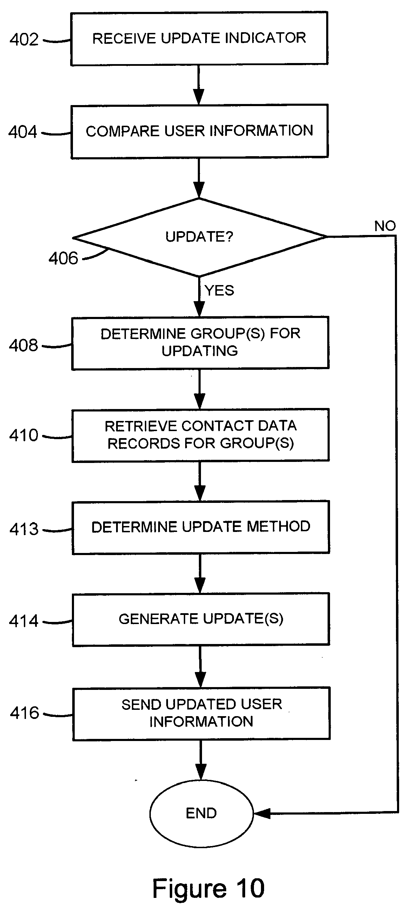

A flowchart illustrating a method of providing an update to contact information is shown in Figure 10. The method shown in the flowchart may be performed by the processor 102 performing stored instructions from a computer-readable medium. The update indicator, as referred to above, is received 402, thereby indicating that a change may have occurred to the user information. It will be appreciated that the update indicators may differ depending on the user information that has changed. When the update indicator is received, a comparison of new user information to previously stored user information is carried out 404 to determine changes made to the user information. The comparison is dependent on the user information that has changed. For example, when a save option to update user information is received, the user information is compared to previously cached user-information. Similarly, when the device powers up from an off-power state, the SIM/RUIM card may have changed and a comparison is carried out with previously cached information. When a new device is activated with the host system 250, PIN number is compared to the previous PIN for the same user stored at the host system 250. Thus, upon selection of a save option to update user information, a comparison of the user information is carried out to determine what, if any, changes are made. Similarly, when the portable electronic device is powered up, a comparison of the previous mobile phone number to the current mobile phone number is carried out. Further, when a portable electronic device is activated for communication with the host system 250, a comparison of the previous PIN number for the user to the current PIN number is carried out. It is then determined 406, based on the comparison, whether or not there is any change to the user information and if there is no change, the method ends. If, however, there is a change to the user information, the notification group or groups, for which an update is to be provided, are determined 408 based on the contact information that has changed and based on the contact information that is to be sent for each group, as described above. The contact data records categorized in a notification group, for which an update is to be provided, are retrieved 410 and an update method is determined 412 for each of the contact data records. The update method may be determined based on the contact data available in the fields of the contact data record and based on an order of priority. For example, the update may be provided using any of PIN, email, or SMS messaging. The order of priority may be PIN messaging first, email second and SMS messaging third. Thus, email messaging may be used if the PIN field in the respective contact data record is not populated with a number. SMS messaging may be used if both the PIN and the email fields in the respective contact data record are not populated. The order of priority may be device-defined or may be user-selectable in any suitable manner. With the update method determined for each contact, the updates are generated 414 and the update is sent 416 for the contact data records retrieved. Therefore, updates may be sent to devices that, for example, do not have an associated PIN.

An update that is sent from the portable electronic device 100 to other electronic devices, that are associated with the contact data records, may be any suitable update. For example, the update may be a message informing of the change to the contact information for users of other electronic devices to view and update a contact data record accordingly. Alternatively, the update may be automatically stored when the automatic storage is supported by the recipient device. The automatic update may be sent by PIN messaging to update a contact data record at the other electronic devices that support PIN messaging. The automatic update may provide users of the other electronic devices with an option to accept or reject the update.

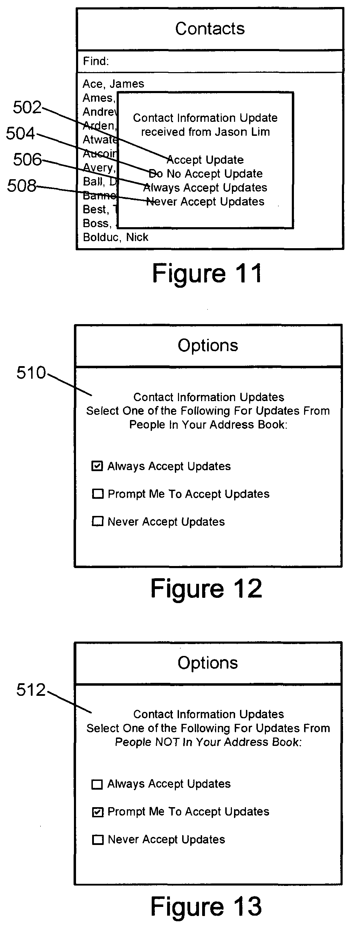

The portable electronic device 100 is also operable to receive an update from other electronic devices, for updating a contact data record stored at the portable electronic device 100. When an update is received, the updated contact data record may be automatically stored at the portable electronic device 100. The contact data record, absent the information that is not provided based on the notification group and the defined information from the selection list for the group, is received and stored to ensure completeness. Alternatively, the update may be received in a message for user viewing and manually updating by opening the respective contact and editing. The update may be automatically stored when the sending and recipient electronic device supports automatic updating, for example, when the update is sent by PIN messaging. Figure 11 shows one example of screen shot upon receipt of an automatic update at the portable electronic device 100. In this example, the user is given four options upon receipt of the update at the portable electronic device 100. The options includes an "Accept Update" option 502 to accept and store the updated contact data record, a "Do Not Accept Update" option 504 to reject the updated contact data record, an "Always Accept Updates" option 506 to accept the current update and all future updates without prompting the user and a "Never Accept Updates" option 508 to reject the current update and all future updates without prompting the user.

Alternatively, the user may set contact information update acceptance rules in a menu list of options such as that shown in Figures 12 and 13 which show a menu 510 of selectable acceptance rules for updating contact data records already stored at the portable electronic device 100 and a menu 512 of selectable rules for updating contact data records not already stored at the portable electronic device 100, respectively.

The update may also be received in a message for viewing and manually updating. When an update is sent by PIN messaging, for example, the device supports automatic updating and the automatic update is sent. When an update is sent to a device that PIN is not available for, the message may be sent for viewing and manual updating.

The portable electronic device described above is provided for the purpose of describing one example. Other portable electronic devices with different features may be used. For example, a touch screen may be used for input rather than a keyboard or a trackball. Further, the screen shots shown are provided for the purpose of describing examples and the screen dimensions and the information shown may differ.

Advantageously, changes to contact information such as a phone number, PIN, email address, or other suitable contact information for a user of a portable electronic device, are automatically detected and update messages are sent to contacts in a contacts database. The update messages may be selectively sent to contacts based on the updated information and a category of the contact so that, for example, personal information is not sent to business contacts.

While the embodiments described herein are directed to particular implementations of the electronic device and method of controlling the electronic device, the above-described embodiments are intended to be examples. It will be understood that alterations, modifications and variations may be effected without departing from the scope of the present disclosure.

## Claims

1. A method, performed at a portable electronic device, of providing an update to contact information of a user of the portable electronic device (100), the method comprising:
categorising contacts into a plurality of notification groups;
selecting, by a user, contact information of the user that is to be sent to each contact in a notification group when a change to that contact information is determined;
determining that the contact information has changed;
determining at least one notification group for which an update is to be provided based on the contact information that has changed, and based on the contact information selected to be sent to each contact in a notification group;
retrieving contact data from contact data records of the at least one notification group, the contact data records stored at the portable electronic device (100); and
generating and sending updates from the portable electronic device (100) based on the contact data of the contact data records.

2. The method according to claim 1, wherein determining that the contact information has changed comprises comparing new contact information to previous contact information.

3. The method according to claim 2, comprising receiving an indication of a possible update to contact information prior to comparing, wherein comparing is carried out in response to receiving the indication.

4. The method according to claim 3, wherein receiving an indication of a possible update comprises at least one of receiving a save command to save new contact information, powering up from an off-power state, and activating the portable electronic device (100) with a host system.

5. The method according to claim 1, comprising selecting an update method for each contact data record of the group, prior to generating and sending the updates.

6. The method according to claim 1, comprising determining available electronic messaging contact data for each of the contact data records of the group prior to selecting the update method, and wherein selecting the update method comprises selecting based on the available electronic messaging data.

7. The method according to claim 5, wherein selecting the update method comprises selecting an update method based on an order of priority.

8. The method according to claim 6, wherein sending updates from the portable electronic device (100) comprises sending update messages including the changed information to other electronic devices for updating by respective users.

9. The method according to claim 6, wherein sending the updates from the portable electronic device (100) comprises sending an update to other electronic devices for automatically updating respective records at the other electronic devices.

10. An electronic device (100) comprising:
a display device (112);
an input device;
a memory unit (110); and
a processor (102) operably connected to the display device (112), the input device and the memory unit (110) to execute a program stored in the memory unit (110) to cause the electronic device (100) to carry out the method according to any one of claims 1 to 9.

11. A computer program product comprising computer-readable medium having computer-readable code embodied therein executable by a processor (102) of a portable electronic device (100) to cause the portable electronic device (100) to perform the method of any of claims 1 to 9.

## Patentansprüche

1. Verfahren, das auf einer tragbaren elektronischen Vorrichtung durchgeführt wird, und eine Aktualisierung von Kontaktinformationen eines Benutzers der tragbaren elektronischen Vorrichtung (100) bereitstellt, wobei das Verfahren Folgendes umfasst:
Kategorisieren von Kontakten in eine Vielzahl von Benachrichtigungsgruppen;
Auswählen, durch einen Benutzer, von Kontaktinformationen des Benutzers, die zu jedem Kontakt in einer Benachrichtigungsgruppe zu senden sind, wenn eine Änderung dieser Kontaktinformationen bestimmt wird;
Bestimmen, dass sich die Kontaktinformationen geändert haben;
Bestimmen mindestens einer Benachrichtigungsgruppe, für die eine Aktualisierung bereitzustellen ist, basierend auf den Kontaktinformationen, die sich geändert haben, und
basierend auf den Kontaktinformationen, die dazu ausgewählt sind, zu jedem Kontakt in einer Benachrichtigungsgruppe gesendet zu werden;
Abrufen von Kontaktdaten aus Kontaktdatensätzen der mindestens einen Benachrichtigungsgruppe, wobei die Kontaktdatensätze in der tragbaren elektronischen Vorrichtung (100) gespeichert sind; und
Erzeugen und Senden von Aktualisierungen von der tragbaren elektronischen Vorrichtung (100) basierend auf den Kontaktdaten der Kontaktdatensätze.

2. Verfahren nach Anspruch 1, wobei das Bestimmen, dass sich die Kontaktinformationen geändert haben, das Vergleichen von neuen Kontaktinformationen mit vorherigen Kontaktinformationen umfasst.

3. Verfahren nach Anspruch 2, das den Empfang eines Hinweises auf eine mögliche Aktualisierung von Kontaktinformationen vor dem Vergleich umfasst, wobei der Vergleich als Reaktion auf den Empfang des Hinweises durchgeführt wird.

4. Verfahren nach Anspruch 3, wobei der Empfang eines Hinweises einer möglichen Aktualisierung mindestens eines von Folgendem umfasst: Empfang eines Speicherbefehls zum Speichern neuer Kontaktinformationen, Einschalten ausgehend von einem Stromsparzustand und Aktivieren der tragbaren elektronischen Vorrichtung (100) mit einem Hostsystem.

5. Verfahren nach Anspruch 1, das das Auswählen eines Aktualisierungsverfahrens für jeden Kontaktdatensatz der Gruppe vor dem Erzeugen und Senden der Aktualisierungen umfasst.

6. Verfahren nach Anspruch 1, das Folgendes umfasst: Bestimmen von verfügbaren elektronischen Nachrichtenübermittlungskontaktdaten für jeden der Kontaktdatensätze der Gruppe vor dem Auswählen des Aktualisierungsverfahrens und wobei das Auswählen des Aktualisierungsverfahrens das Auswählen basierend auf den verfügbaren elektronischen Nachrichtenübermittlungsdaten umfasst.

7. Verfahren nach Anspruch 5, wobei das Auswählen des Aktualisierungsverfahrens das Auswählen eines Aktualisierungsverfahrens basierend auf einer Reihenfolge der Priorität umfasst.

8. Verfahren nach Anspruch 6, wobei das Senden von Aktualisierungen von der tragbaren elektronischen Vorrichtung (100) das Senden von Aktualisierungsnachrichten, die die geänderten Informationen enthalten, zu anderen elektronischen Vorrichtungen zur Aktualisierung durch die jeweiligen Benutzer umfasst.

9. Verfahren nach Anspruch 6, wobei das Senden der Aktualisierungen von der tragbaren elektronischen Vorrichtung (100) das Senden einer Aktualisierung zu anderen elektronischen Vorrichtungen umfasst, um entsprechende Datensätze auf den anderen elektronischen Vorrichtungen automatisch zu aktualisieren.

10. Elektronische Vorrichtung (100), die Folgendes umfasst:
eine Anzeigevorrichtung (112);
eine Eingabevorrichtung;
eine Speichereinheit (110) und
einen Prozessor (102), der betriebsmäßig mit der Anzeigevorrichtung (112), der Eingabevorrichtung und der Speichereinheit (110) verbunden ist, um ein Programm auszuführen, das in der Speichereinheit (110) gespeichert ist, um die elektronische Vorrichtung (100) zu veranlassen, das Verfahren nach einem der Ansprüche 1 bis 9 durchzuführen.

11. Computerprogrammprodukt, das ein computerlesbares Medium umfasst, in dem computerlesbarer Code verkörpert ist, der von einem Prozessor (102) einer tragbaren elektronischen Vorrichtung (100) ausgeführt werden kann, um die tragbare elektronische Vorrichtung (100) zu veranlassen, das Verfahren nach einem der Ansprüche 1 bis 9 auszuführen.

## Revendications

1. Procédé, mis en oeuvre sur un dispositif électronique portable, de fourniture d'une mise à jour d'informations de contact d'un utilisateur du dispositif électronique portable (100), le procédé comprenant le fait :
de catégoriser des contacts en une pluralité de groupes de notifications ;
de sélectionner, par un utilisateur, des informations de contact de l'utilisateur qui doivent être envoyées à chaque contact dans un groupe de notifications lorsqu'un changement à ces informations de contact est déterminé ;
de déterminer que les informations de contact ont changé ;
de déterminer au moins un groupe de notifications pour lequel une mise à jour doit être fournie sur la base des informations de contact qui ont changé, et sur la base des informations de contact sélectionnées devant être envoyées à chaque contact dans un groupe de notifications ;
d'extraire des données de contact à partir des enregistrements de données de contact de l'au moins un groupe de notifications, les enregistrements de données de contact étant stockés sur le dispositif électronique portable (100) ; et
de générer et envoyer des mises à jour à partir du dispositif électronique portable (100) sur la base des données de contact des enregistrements de données de contact.

2. Procédé selon la revendication 1, dans lequel la détermination du fait que les informations de contact ont changé comprend le fait de comparer de nouvelles informations de contact à des informations de contact précédentes.

3. Procédé selon la revendication 2, comprenant la réception d'une indication d'une éventuelle mise à jour d'informations de contact avant la comparaison, dans lequel la comparaison est réalisée en réponse à la réception de l'indication.

4. Procédé selon la revendication 3, dans lequel la réception d'une indication d'une éventuelle mise à jour comprend au moins l'une parmi la réception d'une instruction de sauvegarde pour sauvegarder de nouvelles informations de contact, la mise sous tension à partir d'un état d'arrêt, et l'activation du dispositif électronique portable (100) avec un système hôte.

5. Procédé selon la revendication 1, comprenant le fait de sélectionner un procédé de mise à jour pour chaque enregistrement de données de contact du groupe, avant de générer et d'envoyer les mises à jour.

6. Procédé selon la revendication 1, comprenant le fait de déterminer des données de contact de messagerie électronique disponibles pour chacun des enregistrements de données de contact du groupe avant de sélectionner le procédé de mise à jour, et dans lequel la sélection du procédé de mise à jour comprend la sélection sur la base des données de messagerie électronique disponibles.

7. Procédé selon la revendication 5, dans lequel la sélection du procédé de mise à jour comprend le fait de sélectionner un procédé de mise à jour sur la base d'un ordre de priorité.

8. Procédé selon la revendication 6, dans lequel l'envoi des mises à jour à partir du dispositif électronique portable (100) comprend le fait d'envoyer des messages de mise à jour comportant les informations changées à d'autres dispositifs électroniques pour une mise à jour par des utilisateurs respectifs.

9. Procédé selon la revendication 6, dans lequel l'envoi des mises à jour à partir du dispositif électronique portable (100) comprend le fait d'envoyer une mise à jour à d'autres dispositifs électroniques pour mettre à jour automatiquement des enregistrements respectifs au niveau des autres dispositifs électroniques.

10. Dispositif électronique (100) comprenant :
un dispositif d'affichage (112) ;
un dispositif d'entrée ;
une unité de mémoire (110) ; et
un processeur (102) relié de manière fonctionnelle au dispositif d'affichage (112), au dispositif d'entrée et à l'unité de mémoire (110) pour exécuter un programme stocké dans l'unité de mémoire (110) pour amener le dispositif électronique (100) à réaliser le procédé selon l'une quelconque des revendications 1 à 9.

11. Produit de programme informatique comprenant un support lisible par ordinateur ayant un code lisible par ordinateur incorporé en son sein exécutable par un processeur (102) d'un dispositif électronique portable (100) pour amener le dispositif électronique portable (100) à mettre en oeuvre le procédé de l'une des revendications 1 à 9.
